# EUROPEAN PATENT SPECIFICATION

(11) **EP 2 457 651 B1**
(45) Date of publication and mention of the grant of the patent: **20.05.2015**
(21) Application number: 09847487.7
(22) Date of filing: 26.11.2009
(51) Int. Cl.: B01J 19/12, B01J 19/20, H05B 6/80

(54) **CHEMICAL REACTOR AND ITS USAGE IN CHEMICAL REACTION**
CHEMISCHER REAKTOR UND SEINE VERWENDUNG FÜR CHEMISCHE REAKTIONEN
RÉACTEUR CHIMIQUE ET SON UTILISATION DANS UNE RÉACTION CHIMIQUE

(30) Priority: 20.07.2009 CN 200910088807
(43) Date of publication of application: 30.05.2012
(73) Proprietor: Beijing Sijiantong Technology&Development Co., Ltd, Beijing 100083 (CN)
(72) Inventor: LI, Yunlong, Beijing 100083 (CN); ZHU, Chunfeng, Beijing 100083 (CN); TONG, Yangchuan, Beijing 100083 (CN)
(74) Representative: advotec.
(86) International application number: PCT/CN2009/075159
(87) International publication number: WO 2011/009252

(56) References cited:
- WO-A1-2005/030385
- WO-A1-2008/096461
- CN-A- 1 534 423
- CN-A- 101 400 195
- CN-A- 101 400 195
- GB-A- 2 420 542
- US-A- 3 777 095
- US-A- 5 326 538
- US-A- 5 330 623
- US-A- 6 104 015
- US-A1- 2005 095 181

## Description

### Field of the Invention

The present invention relates to a chemical reactor as well as the usage of the chemical reactor in chemical reaction.

### Background of the Invention

Microwave is a kind of electromagnetic wave with wavelength between infrared wavelength and radio wavelength (i.e., within 1 mm -100 cm range).

Microwave has a feature of "volume phase heating" without temperature gradient, which can be used to heat up materials rapidly and uniformly, and has advantages of high thermal efficiency and pollution-free. In addition, microwave has a special "non-heating effect" because it directly acts on the molecules of the reactants. Experiments have shown that microwave have special effects, including: change the process of chemical reaction, decrease the activation energy required for reaction, increase reaction rate, increase equilibrium conversion rate, reduce byproducts, and change stereoselectivity of the product, etc. Owing to the special promoting effects of microwave to chemical reaction, the usage of microwave in chemical reaction has not only great significance in theoretical research but also great potential in industrial application.

With regard to the above-mentioned features of microwave, in recent years, microwave has been widely researched and applied as an efficient and clean heating means and a chemical reaction means for chemical reaction. However, owing to the short penetration depth of microwave, hotspots may be generated in the material under continuous microwave irradiation and therefore it is difficult to control the reaction temperature; for materials with high viscosity, it is difficult to transfer the material and mix the material homogeneously in the reactor within a microwave cavity. As a result, at present, microwave apparatuses for chemical reaction can't be applied in large-scale industrial applications; instead, the application of microwave apparatuses is only in the stage of laboratory research.

In the Chinese Patent Application No. CN2821468Y, a microwave processor is disclosed. The microwave processor comprises at least a box cavity, wherein, pipe connectors are provided at the center of two opposite side end faces of the box cavity respectively; among the other two opposite side end faces of the box cavity, one side end face is closed, and the other side end face has a flange connector connected to a microwave generating device; a pipe for the fluid to be heated is through set in the box cavity, and the two ends of the pipeline protrudes from the pipe connector. Several of such processors (≤15) can be connected to form a long reactor; while several pipes can be provided in parallel in the cavity. Though this apparatus takes account of the drawback of low penetration depth of microwave, it still doesn't solve the problem of uncontrollable material temperature under continuous microwave irradiation; therefore, it can only be used to heat fluids, but can't be used for chemical reactions that require temperature control under continuous microwave irradiation.

In the Chinese Patent Application No. CN1091394C, an industrial microwave oven for fluid treatment is disclosed, which comprises a microwave resonant cavity with a microwave input port, fluid inlet and outlet and an operating door, as well as sealed screens provided on the fluid inlet and outlet respectively; wherein, a fluid circulator specially designed for allowing the fluid to get physically and chemically reacted completely in a microwave field is provided in the resonant cavity; devices connected to the fluid inlet and outlet for continuous feed and discharge of the fluid as required for the process are mounted on the upper part and lower part of the resonant cavity respec-tively. Though the apparatus ensures continuous feed and discharge of the material, it can only be used to heat up fluids, but can't be used for chemical reactions that require temperature control under continuous microwave irradiation.

In Chinese Patent Application No. CN2813090Y, a microwave reactor is disclosed; which can be used for continuous organic chemical synthesis; it utilizes the microwave produced by a microwave generator to heat up the organic mixture in a resonant cavity. The resonant cavity has three flanges of connecting port, wherein, the first flange connects a microwave barrier to a microwave generator in a sealed manner, the second flange is connected to a feed pipe, and the third flange is connected to a coil heat exchanger in a sealed manner. The coil heat exchanger transfers excessive reaction heat, to maintain the reaction within predefined temperature range and pressure range. Though the reactor can control the reaction temperature in some degree, the resonant cavity is small, and the duration of microwave irradiation on the material in the resonant cavity is short, and can't ensure the completeness of reaction and the yield rate of product. In addition, the reactor is not applicable to materials with high viscosity.

In Chinese Patent Application No. CN101400195A, a microwave heating apparatus is disclosed, which comprises a microwave irradiating cavity, a material pipe, and a heat exchange pipe. The material pipe is through set in the microwave irradiating cavity, and the heat exchange pipe is provided in the material pipe and is led into and led out of the orifices or wall of the material pipe. The microwave heating apparatus disclosed in the invention can control the material temperature in the material pipe under continuous microwave irradiation, thus achieves controlling temperature in some degree. However, the reaction system is not ideal for chemical reactions of materials having high viscosity, semi-solid phase, and high fouling tendency, and can't be used effectively for heterogeneous catalysis reactions, and have problems related with fouling removal and recondition of the pipe; in addition, when the reaction system is used in chemical reactions that produce gaseous byproducts, it can't exhaust the gasses produced timely, and therefore will influence yield rate of the product.

GB 2 420 542 A disclosed an apparatus comprising an auger within an impervious shield, and pyrolysis or evaporation is directly incurred in the shield. US 6,104,015 A disclosed an apparatus in which alumina particles are fed therein through a chute into a tube which is set at an angle, and the tube is rotated at a slow rate of speed to assure that the particles in it are tumbled. US 3,777,095 A disclosed an apparatus comprising a cylindrical metal heating chamber and a plurality of inwardly projecting helically arranged metal strips, the microwave heating process is incurred in the heating chamber. US 5,330,623 A disclosed a process of destructive distillation of organic material including the organic material is pyrolysed by pre-heating the organic material in a preheat zone by a hot gas stream; feeding pre-heated material directly to a microwave discharge zone by means of conveyor; pyrolysing the pre-heated material in the microwave discharge zone to produce solid fission products containing elemental carbon and gaseous by-products; and recycling at least some of the latter to the hot gas stream which is supplied to the pre-heating zone.

### Summary of the Invention

The object of the present invention is to provide a chemical reactor, which is applicable to chemical reactions of various liquid materials therein, in particular to materials having high viscosity, semi-solid phase, and high fouling tendency; especially, the chemical reactor provided in the present invention is also marvelously applicable to heterogeneous reactions or heterogeneous catalyst reactions.

The chemical reactor provided in the present invention comprises a microwave irradiating apparatus and a chemical reaction apparatus, the microwave irradiating apparatus comprises a microwave generator and a microwave irradiating cavity; wherein, the chemical reaction apparatus comprises a tank and a device for controlling the flow of the material, and at least a part of the tank is located in the microwave irradiating cavity.

The present invention further discloses the use of the chemical reactor provided in the present invention in chemical reactions.

The chemical reactor provided in the present invention can be used for chemical reactions of various liquid materials, especially for chemical reactions of materials having high viscosity, semi-solid phase, and high fouling tendency, and heterogeneous reactions and heterogeneous catalyst reactions. In addition, when the chemical reactor provided in the present invention is used for chemical reactions for producing gaseous byproducts, it can exhaust the gasses timely, decrease the concentration of the resulting byproducts in the tank, and thereby drive the equilibrium of chemical reaction towards the product direction, and improve the conversion rate of the reactants and the yield rate of product.

### Brief Description of the Drawings

Figure 1 is a schematic sectional view of a first embodiment of the chemical reactor provided in the present invention;
Figure 2 is a schematic sectional view of a second embodiment of the chemical reactor provided in the present invention;
Figure 3 is a schematic sectional view of a third embodiment of the chemical reactor provided in the present invention;
Figure 4 is a schematic sectional view of the tank, highlighting a plurality of second protuberances;
Figure 5 is a schematic diagram of a single-screw driving mechanism, highlighting the first protuberances arranged within the edges of the blades;
Figure 6 is a schematic diagram of an apparatus with 3 microwave irradiating cavities;
Figure 7 is a schematic diagram of a reaction system that utilizes the chemical reactor provided in the present invention.

### Detailed Description of the Embodiments

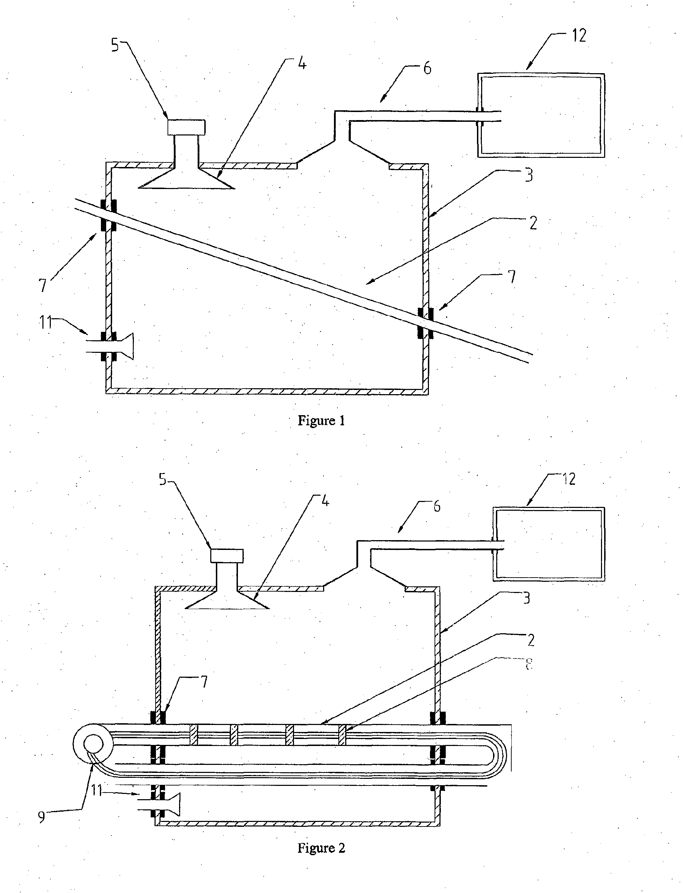

According to Figure 1, 2, and 3, the chemical reactor provided in the present invention comprises a microwave irradiating apparatus and a chemical reaction apparatus, the microwave irradiating apparatus comprises a microwave irradiating cavity 3 and a microwave generator (not shown); the chemical reaction apparatus comprises a tank 2 and a device for controlling the flow of the material, and at least a part of the tank 2 is located in the microwave irradiating cavity 3.

The microwave irradiating apparatus comprises at least a waveguide tube 4 and a microwave generator 5, the waveguide tube 4 is provided on the wall of the microwave irradiating cavity 3, the microwave generator 5 is outside of the microwave irradiating cavity 3 and is connected to the waveguide tube 4, and emits microwave into the microwave irradiating cavity 3. If a plurality of waveguide tubes 4 are used, preferably the waveguide tubes 4 are evenly distributed on the inner wall of the microwave irradiating cavity 3. The waveguide tubes 4 can be provided on an inner wall of the microwave irradiating cavity or distributed on a plurality of inner walls.

On the microwave irradiating cavity, sealing devices 7 are provided at places where the parts of the chemical reactor penetrate the microwave irradiating cavity, for example, sealing devices are provided at the place where the tank 2 penetrates the microwave irradiating cavity 3. The sealing devices can be devices known to those skilled in the art for protection against microwave leakage, for example, they can be metal screens made of a microwave reflecting material (e.g., a metallic material), or they can be high-temperature microwave screening sealant. The metallic material can be stainless steel, aluminum, aluminum alloy, iron, copper, or silver, or preferably, stainless steel or aluminum alloy.

The microwave irradiating cavity 3 is made of a microwave reflecting material, or the inner wall of the microwave irradiating cavity is coated with a material layer which can reflect the microwave.

In the chemical reactor provided in the present invention, the upper part of the tank 2 is not closed, for example, a chemical reaction channel of which the upper part is open. The tank 2 can be in any shape, as long as the reactants can flow through it easily, for example, it can be in straight shape, spiral shape, or snake shape. Wherein, a straight tank is a tank with a straight axis, a spiral-shaped tank is a tank with a spiral-shaped axis, and a snake-shaped tank is a tank with a snake-shaped axis. The cross sectional shape of the tank should be helpful for guiding the flow of the reactants, for example, it can be U shape, arc shape, semi-circular shape, elliptical shape, or square shape. If the tank 2 is in straight shape or snake shape, it can be fixed horizontally or in an inclined manner, to adapt to the actual flow of the materials.

When the chemical reactor provided in the present invention is used for a vehement chemical reaction with high material splashing tendency, preferably a top cover that covers the tank at least partially can be provided on the top of the tank to protect against material splashing, which is to say, the top cover can cover the top part of the tank partially or entirely. The top cover that covers the top part of the tank partially can be in sieve shape or grating shape.

In the chemical reactor provided in the present invention, the tank 2 can be made of a totally microwave reflecting material or a totally microwave transmitting material; however, a totally microwave reflecting material is preferred. The totally microwave reflecting material can be the material described above, while the totally microwave transmitting material is known to those skilled in the art, such as polyimide or a material modified from polyimide, polyetheretherketone or a material modified from polyetheretherketone, polytetrafluoroethylene or a material modified from polytetrafluoroethylene, polyethylene or a material modified from polyethylene, polypropylene or a material modified from polypropylene, polyvinylbenzene or a material modified from polyvinylbenzene, and quartz or glass, etc. Polytetrafluoroethylene or a material modified from polytetrafluoroethylene, or polyvinylbenzene or a material modified from polyvinylbenzene is preferred. The top cover can be made of a totally microwave transmitting material described above.

In the chemical reactor provided in the present invention, preferably, the device for controlling the flow of the material comprises a device that can drive the material to flow.

Figure 1 shows a first embodiment of the chemical reactor provided in the present invention, as shown in Figure 1, the device that drives the material to flow comprises a tank adjusting device that adjusts the elevation difference between the both ends of the tank. The tank adjusting device can be any device known to those skilled in the art for adjusting the elevation difference between the both ends of the tank, for example, it can comprise two sliding chutes that are vertically arranged at the place where the ends of the tank are through set between two sides of the microwave irradiating cavity and fixing knobs; the two ends of the tank can slide in top-bottom direction along the sliding chutes, so that the elevation difference between the both ends of the tank can be adjusted; or, screws for adjusting the height of the microwave irradiating cavity can be provided on the foot part of the microwave irradiating cavity, so as to adjust the inclination of the entire microwave irradiating cavity to the required elevation difference, to attain the purpose of adjusting the elevation difference between the both ends of the tank. The inclination of the tank can be adjusted by adjusting the elevation difference between the both ends of the tank with the tank adjusting device, according to the required flow of the material in the tank.

Figure 2 shows a second embodiment of the chemical reactor provided in the present invention, as shown in Figure 2, the tank is a straight one, and the device that drives the material to flow comprises a plurality of scrapers 8 and a drive unit 9, wherein, the plurality of scrapers are fixed to the drive unit 9 at an interval, at least a part of the drive unit 9 is located in the tank 2, and the shape of the scrapers 8 preferably matches the cross section of the tank 2; the drive unit 9 can be any device known to those skilled in the art for driving material flow, for example, it can be a belt drive unit or a chain sprocket drive unit. If the material has high viscosity or is in semi-solid phase, the material can be driven with the device described in the embodiment, so as to prevent the material from being detained in the tank.

The scrapers can be made of a totally microwave transmitting material or a totally microwave reflecting material, as described above. Preferably, the scrapers are made of a totally microwave transmitting material.

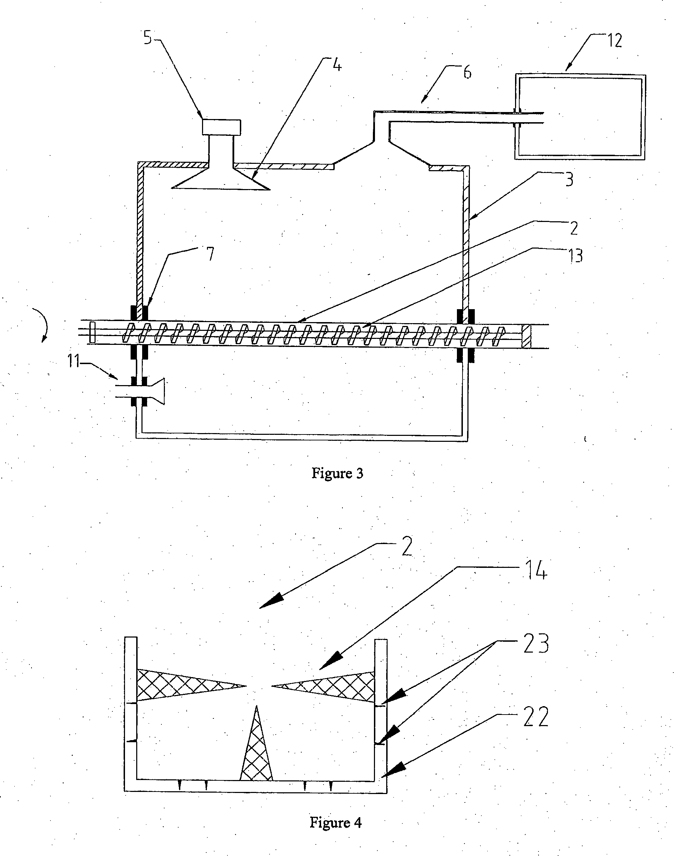

Figure 3 shows a third embodiment of the chemical reactor provided in the present invention, as shown in Figure 3, the tank is a straight one, and the device for driving the material to flow comprises a single-screw driving mechanism or a multi-screw driving mechanism, which is located in the tank; Figure 3 shows a single-screw driving mechanism 13. If the material has high viscosity or in semi-solid phase, preferably the device in the above-mentioned embodiment is used to drive the material to flow, and thereby prevent the material from being detained in the tank.

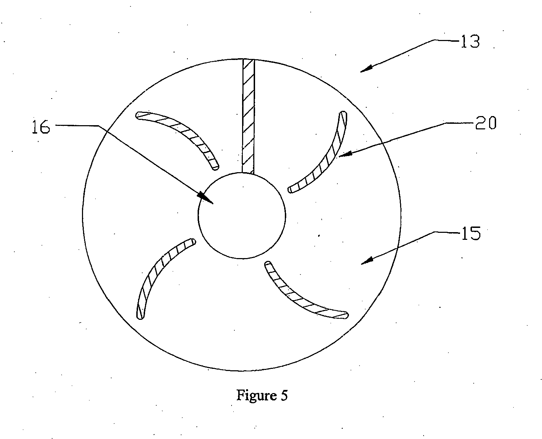

As shown in Figure 5, the screw in the single-screw driving mechanism or multi-screw driving mechanism comprises a screw shaft 16 and screw blades 15, wherein, one or more first protuberances 20 are arranged on the surface of the screw blades 15 in the single-screw driving mechanism or multi-screw driving mechanism. The first protuberances 20 are helpful for driving the material to flow in radial direction and mixing the material more homogeneously.

Preferably, the first protuberances 20 can be plate pieces in any shape, with curved or flat surfaces; preferably the first protuberances 20 are distributed on the entire screw blade 15 at an even interval. Preferably, the one or more first protuberances 20 are vertically arranged on the surfaces of the screw blades 15. The one or more first protuberances 20 can be arranged on a single-screw driving mechanism or a multi-screw driving mechanism.

Preferably, the minimum radial distance from the first protuberances to the screw shaft is 1/5-4/5 of the radial distance from the outer edge of screw blade to the screw shaft, and the length of the first protuberances along the screw shaft is 1/5-4/5 of the screw pitch. Preferably, if a plurality of first protuberances are provided, the first protuberances are arranged at the same minimum radial distance to the screw shaft and are in the same length along the screw shaft; moreover, the first protuberances are arranged at the same interval between them. The interval is defined as the distance between two points on adjacent first protuberances that are the nearest to the screw shaft and at the same radial distance to the screw shaft.

The single-screw driving mechanism or multi-screw driving mechanism can be made of any totally microwave transmitting material or totally microwave reflecting material; the examples of totally microwave transmitting materials and totally microwave reflecting materials have described above. A totally microwave transmitting material is preferred.

In the chemical reactor provided according to the present invention, the device for controlling the flow of the material further comprises a device for altering the flow state of the material; the device for altering the flow state of the material can be arranged separately, or arranged in combination with the first embodiment of the present invention. The device for altering the flow state of the material is a device that alters the material flow state from laminar state to turbulent state or enhances the turbulent state and thereby improves the mixing of the material, for example, the device can be a flow throttling device.

Preferably, the device for altering the flow state of the material can comprise second protuberances arranged in the tank. As shown in Figure 4, a plurality of second protuberances 14 are arranged in the tank 2. The second protuberances 14 arranged in the tank 2 is helpful for improving the turbulent state and mixing result of the material, and is favorable for increasing the reaction rate and escape of the gaseous byproducts (if any) produced in the reaction.

According to the invention the device for altering the flow state of the material comprises a solid particle bed arranged in the tank or a plurality of solid particle beds arranged along the length of the tank, and the material can run through the solid particle bed(s). The one or more solid particle beds can be arranged separately or in combination with the second protuberances.

The solid particle bed(s) can be bed(s) obtained by loading solid particles into the space separated out by two porous barriers that are fixed in the tank and have pore size smaller than the particle size of the solid particles or obtained by fixing bags filled with the solid particles in the tank. The porous barriers or bags are inertial to the chemical reaction. The solid particle bed(s) can be used to improving the mixing of the reactants; the solid particles can be any natural or synthetic inorganic or organic solid particles that do not react with the reactants.

Further, according to the present invention the solid particles are solid catalyst particles. In that case, the solid catalyst particles can improve the mixing of the reactants and serve as a catalyst for the chemical reaction.

In the chemical reactor provided in the present invention, preferably, the second protuberances can be made of any totally microwave transmitting material or totally microwave reflecting material; the examples of totally microwave transmitting materials and totally microwave reflecting materials have been described above. Preferably, the second protuberances are made of a totally microwave transmitting material.

Preferably, the chemical reactor provided in the present invention further comprises a heat exchanger and a temperature measuring and controlling device.

The heat exchanger comprises a heat exchanger for material and/or a heat exchanger for microwave irradiating cavity, as shown in Figure 4, the heat exchanger for material comprises a sandwich layer 22 arranged outside of the tank, through which a heat transfer medium can be run; the heat exchanger for microwave irradiating cavity comprises a gas exchanger provided on the microwave irradiating cavity and/or a heat exchanger provided in the microwave irradiating cavity, as shown in Figure 1, 2, and 3, the gas exchanger is a gas exhaust device 6 and/or a gas intake device 11.

Preferably, as shown in Figure 4, the sandwich layer 22 has a plurality of third protuberances 23, which can be in plate shape, e.g., fins. The sandwich layer shares at least a surface with the tank, and has a plurality of third protuberances 23 arranged on at least one of the shared surfaces. The third protuberances 23 are at least arranged on the surfaces shared with the tank, and can be used to increase the heat exchange area and thereby heat up the material more effectively. Preferably, the third protuberances 23 can also be arranged on all inner surfaces of the sandwich Layer, to adjust the flow state of the heat transfer medium flowing in the sandwich layer, for example, adjust the flow state from laminar state to turbulent state, or enhance the turbulent state, and thereby further improve the heat exchange with the material.

Preferably, the sandwich layer is made of a totally microwave reflecting material. The heat transfer medium in the sandwich layer and the heat exchanger can be any heat transfer medium known to those skilled in the art, such as compressed gas, kerosene, hexane, benzene, glycerol, or water, etc.

Preferably, the temperature measuring and controlling device comprises a controller, a material temperature measuring device and/or a microwave irradiating cavity temperature measuring device.

The controller receives the signal of material temperature measured by the material temperature measuring device, and controls the flow rate of the heat transfer medium in the sandwich layer according to the temperature of the heat transfer medium and the measured material temperature; and/or receives the signal of temperature in the microwave irradiating cavity measured by the microwave irradiating cavity temperature measuring device, and controls the gas flow rate in the gas exchanger according to the measured microwave irradiating cavity temperature and/or control the flow rate of the heat transfer medium in the heat exchanger according to the temperature of the heat transfer medium in the heat exchanger and the measured microwave irradiating cavity temperature. It is used to attain the purpose of controlling the temperature of reactants and/or the temperature in the microwave irradiating cavity appropriately. As for the selection of heat transfer medium in the sandwich layer and the temperature of the heat transfer medium, and the selection of heat transfer medium in the heat exchanger in the microwave irradiating cavity and the temperature of the heat transfer medium, those skilled in the art can select appropriate heat transfer medium and appropriate temperature of the heat transfer medium to control the temperature of the chemical reaction, according to the actual condition of heat released in the chemical reaction.

The material temperature measuring device and microwave irradiating cavity temperature measuring device can be any temperature measuring devices known to those skilled in the art, for example, the temperature measuring devices can be temperature sensors, such as infrared temperature sensors or thermal couple sensors. A plurality of temperature sensors for measuring the temperature of the material can be used, and arranged along the axial direction of the tank at an appropriate interval, for example, the temperature sensors can be arranged in the length direction of the tank at 100-500 cm interval, to measure the temperature of the material in the entire tank at different positions accurately.

The controller can be a single-chip or a PLC. It is used to control the flow rate of the heat transfer medium in the sandwich layer, according to the temperature measured by the temperature sensors.

If gaseous byproducts are produced in the chemical reaction of the reactants, the gasses can be exhausted timely through the gas exhaust device 6, and therefore the chemical reaction equilibrium can be further driven towards the product side, and the conversion rate of reactants and the yield rate of product can be further improved. If the gasses released from the chemical reaction are toxic or harmful gasses, they should be collected and treated to prevent environmental pollution. Therefore, preferably, the air exchanger further comprises a collecting unit 12 and a processing unit (not shown). In addition, to utilize the heat source rationally, preferably the air exchanger further comprises a heat exchanger to exchange heat with the exhausted gaseous byproducts and reuse the heat recovered from the exhausted gasses.

If the air exchanger is a gas intake device 11, gasses can be taken into the microwave irradiating cavity 3 through the device 11 for heat exchange, and thereby the temperature in the microwave irradiating cavity 3 can be regulated.

With the air exchanger, heat exchanger in the microwave irradiating cavity, and sandwich layer of the tank working together, the temperature of the chemical reaction and the temperature in the microwave irradiating cavity can be controlled more effectively, so that the temperature of the chemical reaction in the tank can be controlled effectively even after long-time continuous operation of the microwave irradiating cavity.

In the chemical reactor provided in the present invention, the microwave irradiating cavity and the tank can be in the plural respectively; and the tanks can be provided in series or in parallel in the microwave irradiating cavities.

If a plurality of tanks are used, the tanks can be arranged in parallel in the microwave irradiating cavity, so that the material can be distributed in the tanks if the material is in a large volume.

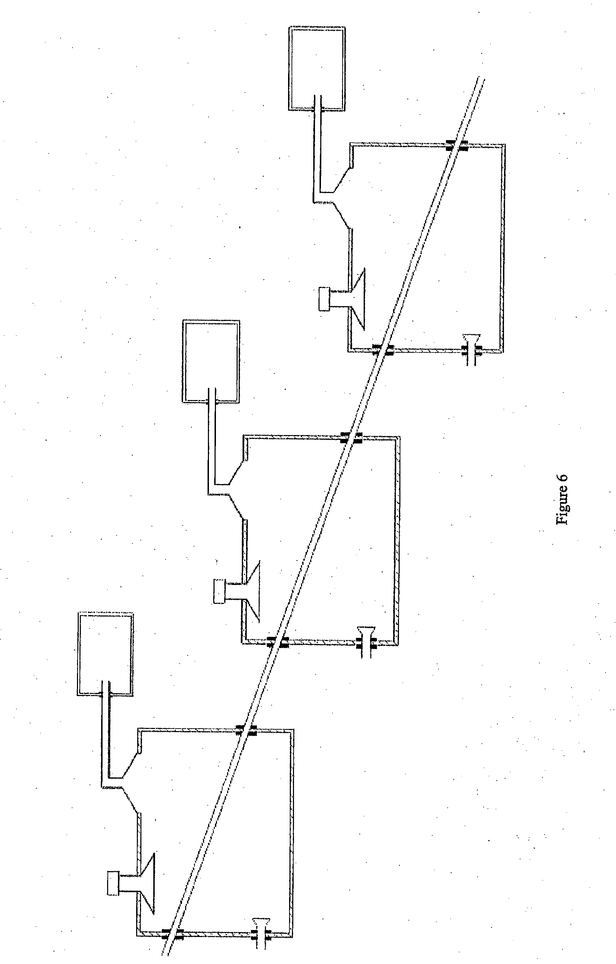

If the duration of chemical reaction of the reactants is long or the chemical reaction is a multi-stage reaction and different reactants have to be added in different stages of reaction, a plurality of microwave irradiating cavities can be used, and a plurality of feed inlets can be arranged; in addition, a plurality of tanks can be used and arranged in the microwave irradiating cavities respectively and communicate with each other in sequence. For example, the microwave irradiating cavities and tanks can be 2-10 in quantity. As shown in Figure 6, 3 microwave irradiating cavities are used, and the tanks run through the 3 microwave irradiating cavities in sequence.

The present invention further discloses the use of the chemical reactor provided in the present invention in chemical reactions. The chemical reactor can be used in chemical reactions of various reactants that required heating; especially, the advantages of the chemical reactor provided in the present invention will be more obvious when the chemical reactor is used for reactions in which volatile small-molecule substances (e.g., water, NH3, HCl, etc.) are produced in the process of reaction or materials having high viscosity, semi-solid phase, or high fouling tendency. For example, the chemical reactions can be additive reactions, polymerization reactions, or substitution reactions. Specifically, the substitution reactions can be esterification reactions, ester exchange reactions, etherification reactions, condensation reactions, hydrolytic reactions, and alkylation reactions, etc. In addition, the chemical reactor can also be applied in ring-cleavage reactions and ring-forming reactions, etc. When the chemical reactor provided in the present invention is used, the microwave frequency can be a frequency known to those skilled in the art, for example, 915MHz and 2,450MHz.

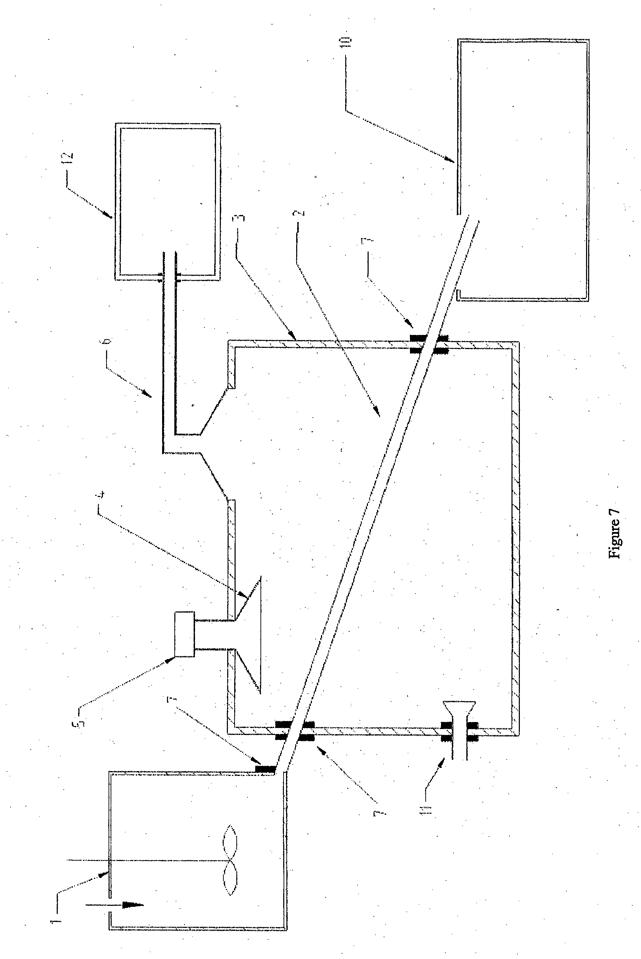

Figure 7 shows a schematic diagram of the reaction system that utilizes the chemical reactor provided in the present invention. As shown in Figure 7, the reactants are mixed to homogeneous state in a material mixer 1, and then the mixture is fed through the tank 2 into the microwave irradiating cavity 3; next, the microwave frequency is adjusted as required and the mixture of reactants is heated up; finally, the product obtained from the reaction is discharged into a product tank 10.

Hereunder the present invention will be detailed in specific examples; however, the present invention is not limited to these examples.

### Example 1

In this example, the chemical reactor shown in Figure 1 is used, wherein:

The microwave irradiating cavity 3 is made of stainless steel, in size of 10 m × 1.5 m × 2 m; the tank 2 is made of stainless steel, with a square section, in 100 mm width and 300 mm height; the tank 2 is in a straight shape and provided in an inclined manner in the microwave irradiating cavity 3, in approx. 10 m total length; the elevation difference of the tank 2 between the inlet and the outlet in the microwave irradiating cavity 3 is 1 m; the sandwich layer 22 is in thickness of 20 mm and made of stainless steel, with 200 fin-shaped protuberances 23 arranged at 50 mm interval in it; the gas exhaust device 6 is a 200 W exhaust fan, and the opening of the gas exhaust device 6 on the microwave irradiating cavity 3 is a round opening in 500 mm radius. In addition, a single-chip controller and material temperature measuring devices are provided, wherein, the material temperature measuring devices are 4 infrared temperature sensors arranged on the upper part of the tank at the same interval.

The chemical reactor provided in the present invention is used for producing phytosterin acetate through an esterification reaction.

The reaction equation is as follows:

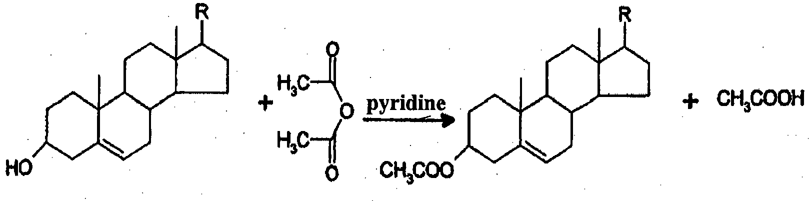

In this example, phytosterin, acetic anhydride, and pyridine (catalyst) are mixed at 1:14:12 in mole ratio, and the mixture is fed at a 5 L/min. flow rate into the chemical reactor; the reaction temperature is controlled with the controller and infrared temperature sensors at 85 °C, the reactants are heated up under microwave irradiation at 2,450 MHz microwave frequency, and the reaction duration is 6 min. The product (phytosterin acetate) is collected in the product tank. The yield rate of the product is as high as 97.5%.

### Comparative example 1

Phytosterin acetate is produced with the method described in example 1, with the difference lying in: the reactants are heated up by heating with a heating jacket, the reaction duration is 12 h, and the yield rate of the product is approx. 90%.

It is seen from the example 1 and the comparative example 1: in the process of reaction in example 1, microwave irradiation heating is utilized to increase the reaction rate; in addition, since the upper part of the tank for material flow is open and a gas exhaust device is employed to effectively exhaust the byproduct of reaction (acetic acid), the chemical reaction is driven towards the product side, and therefore the yield rate of product is improved.

### Example 2

In this example, the chemical reactor shown in Figure 2 is used, and the dimensions of the parts are the same as the dimensions of the chemical reactor in example 1, with the difference lying in: the tank 2 has a U-shaped cross section, in 100 mm width and 300 mm height, and is provided horizontally; the device for controlling the flow of the material comprises scrapers 8 and a belt drive unit 9, wherein, the scrapers 8 are made of polytetrafluoroethylene, in a shape matching the cross sectional shape of tank 2, and are arranged at 30cm interval in the tank. In addition, a single-chip controller and material temperature measuring devices are provided, wherein, the material temperature measuring devices are 4 infrared temperature sensors arranged on the upper part of the tank at the same interval.

The chemical reactor provided in the present invention is used for producing phytosterin stearate through an esterification reaction.

The reaction equation is as follows:

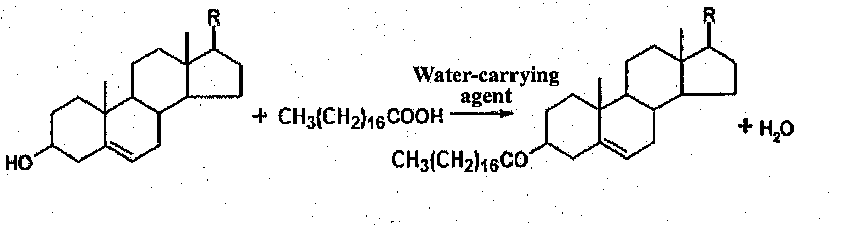

In this example, phytosterin and stearic acid are mixed at 1:1.3 in mole ratio with catalyst (sodium hydrogen sulfate) and water-carrying agent (methyl benzene), the mixture is fed at 3 L/min. flow rate into the chemical reactor, the drive speed of the belt drive unit 9 is 17 mm/s, the mole ratio of sodium hydrogen sulfate to phytosterin is 0.01:1, and the mole ratio of methyl benzene to phytosterin is 1:2; the reaction temperature is controlled at 140°C with the controller and infrared temperature sensors, the reactants are heated up under microwave irradiation at 2,450 MHz microwave frequency, and the reaction duration is 10 min.; the product (phytosterin stearate) obtained is phytosterin stearate, and the yield rate of the product is 97.5%.

### Comparative example 2

Phytosterin stearate is produced with the method described in example 2, with the difference lying in: the reactants are heated up by heating with a heating jacket, the reaction duration is 10 h, and the yield rate of the product is approx. 90%.

It is seen from the example 2 and the comparative example 2: in the process of reaction in example 2, microwave irradiation heating is utilized to increase the reaction rate; in addition, since the upper part of the tank for material flow is open and a gas exhaust device is employed to effectively evaporate and exhaust the byproduct of reaction (water), the chemical reaction is driven towards the product side, and therefore the yield rate of product is improved.

### Example 3

In this example, the chemical reactor shown in Figure 3 is used, and the dimensions of the parts are the same as the dimensions of the chemical reactor in example 1, with the difference lying in: the tank 2 has a U-shaped cross section, in 120 mm width and 300 mm height, and is provided horizontally; the device for controlling the flow of the material is a single-screw driving mechanism, which is made of polytetrafluoroethylene material; the screw shaft is in 50 mm diameter and 2,000 mm length; the screw blades have in 120 mm outer diameter and 40 mm screw pitch. 200 protuberances 20 are arranged on the entire screw blade at 90mm interval (see Figure 5); the minimum radial distance from the plurality of protuberances 20 to the screw shaft is 3/5 of the radial distance from the outer edge of the screw blade to the screw shaft, and the interval between the protuberances 20 along the length of the screw shaft is 3/5 of the screw pitch. In addition, a single-chip controller and material temperature measuring devices are provided, wherein, the material temperature measuring devices are 4 infrared temperature sensors arranged on the upper part of the tank at the same interval.

The above chemical reactor in the present invention is used for hydrolytic reaction of soybean protein.

In this example, soybean protein and water, and papain are mixed at 10:1 weight ratio, and the weight ratio of papain to soybean protein is 1/20; the mixture is fed at 4.4 L/min. flow rate into the chemical reactor. In view of the high concentration and viscosity of the material, a single-screw driving mechanism is used to drive the material to flow through the tank; the speed of the screw is set to 8 rpm. The reaction temperature is controlled at 55 °C with the controller and infrared temperature sensors, the reactants are heated up under microwave irradiation at 2,450 MHz microwave frequency; the reaction duration is 1 h; in the reaction, the soybean protein is hydrolyzed, and the content of amino acid is 0.55 g/L.

### Comparative example 3

The hydrolytic reaction of soybean protein is carried out with the method described in example 3, with the difference lying in: the reactants are heated up by heating with a heating jacket; the reaction duration required to attain the same degree of hydrolysis (i.e., 0.55 g/L amino acid content) is 9 h.

It is seen from the example 3 and comparative example 3: in the process of reaction in example 3, the reaction rate can be increased under microwave heating, and the hydrolytic reaction can complete within a shorter duration. In the comparative example 3, it is difficult to keep the papain active in the long reaction duration; in contrast, the enzyme activity for catalysis can be ensured.

### Example 4

The chemical reactor in example 1 is used, with the difference lying in: the elevation difference of the tank 2 between the inlet and the outlet in the microwave irradiating cavity 3 is 120 mm, and 8 solid catalyst beds are arranged in the tank; the solid catalyst beds are in the same height as the tank, and are arranged at 50 mm interval; the solid catalyst beds are obtained by loading solid catalyst particles into a space separated out by two porous barriers that are arranged with 150 mm distance between them. The porous barriers are in a shape matching the cross section of the tank, and the pores of the porous barriers are in 2 mm size and distributed at 3 pores/cm² intensity. The solid catalyst particles have 1.5 mm average particle diameter. The solid catalyst particles are active carbon particles charged with phosphotungstic acid at 20 wt. % charge rate.

The above chemical reactor in the present invention is used for condensed hydroformylation reaction catalyzed by heteropoly acids to synthesize pentaerythritol mono-aldehyde ketone.

In this example, N,N-dimethyl formamide is used as the solvent to prepare pentaerythritol solution at 20 wt.%. The pentaerythritol solution is fed at 3 L/min. flow rate into the chemical reactor and driven to flow through solid catalyst beds. Under the action of the catalyst, at 75 °C reaction temperature controlled by the controller and infrared temperature sensors, reduced hydroformylation reaction is carried out under irradiation heating at 2,450 MHz microwave frequency, for approx. 12min. Pentaerythritol mono-aldehyde ketone is obtained as the product, and the yield rate of the product is approx. 73%.

### Comparative example 4

Pentaerythritol mono-aldehyde ketone is synthesized with the method described in example 4, with the difference lying in: the reduced hydroformylation reaction catalyzed with heteropoly acids is carried out under heating with a heating jacket to synthesize pentaerythritol mono-aldehyde ketone; the duration required for the reaction is 10 h, and the yield of the product is 32%.

It is seen from the example 4 and comparative example 4: in the process of reaction in example 4, the reaction rate can be increased under microwave heating; especially, the strong acceleration effect of microwave heating is obvious in the heterogeneous catalyst reaction.

### Example 5

The chemical reactor in example 1 is used, with the difference lying in: the elevation difference of the tank 2 between the inlet and the outlet in the microwave irradiating cavity 3 is 120 mm.

The chemical reactor in the present invention is used for coupling reaction between 4-fluorobenzonitrile and sodium benzene sulphinate to synthesize cyanophenyl sulfone. The reaction equation is as follows:

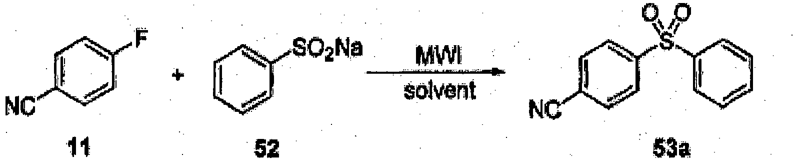

In this example, 4-monofluorobenzene nitrile and sodium benzene sulphinate are mixed at 1:2 mole ratio with catalyst (potassium carbonate) and water (as solvent); the mixture is fed at 4 L/min. flow rate into the chemical reactor; the mole ratio of potassium carbonate to 4-monofluorobenzene nitrile is 1:20, and the weight ratio of water to 4-monofluorobenzene nitrile is 1:0.3; the reaction temperature is controlled at 90°C with the controller and infrared temperature sensors, and the coupling reaction is carried out under irradiation heating at 2450 MHz microwave frequency for 8min., to obtain the product - cyanophenyl sulfone. The yield rate of the product is 91 %.

In contrast, the conventional method for producing cyanophenyl sulfone is: oxidize phenyl thioether with an oxidizer to obtain the product; common oxidizers include hydrogen peroxide, peroxoic acid, periodic acid, and chromium oxide, etc. With such a synthetic method, it is difficult to control the process of reaction, and the raw material aryl thioether itself is a material not available widely; therefore, with that method, the cost of industrial production is very high.

It is seen that the reaction rate of coupling reaction in this example can be increased under microwave heating; in addition, the reaction is easy to implement, and the raw materials required for the reaction are widely available. Therefore, the cost of industrial production is very low.

## Claims

1. A chemical reactor for chemical reactions of various liquid materials, comprising a microwave irradiating apparatus and a chemical reaction apparatus, the microwave irradiating apparatus comprises a microwave generator and a microwave irradiating cavity (3); the chemical reaction apparatus comprises a tank (2) and a device for controlling the flow of the material, the tank (2) is a chemical reaction channel of which the upper part is open, and at least a part of the tank (2) is located in the microwave irradiating cavity (3)
**characterized in that**
the device for controlling the flow of the material comprises a device for altering the flow state of the material from a laminar state to a turbulent state or enhancing the turbulent state and comprises a solid particle bed arranged in the tank or a plurality of solid particle beds arranged along the length of the tank, so that in use the material can run through the solid particle bed or beds;
wherein the solid particles are solid catalyst particles.

2. The chemical reactor according to claim 1, wherein, the tank (2) is in straight shape, spiral shape, or snake shape.

3. The chemical reactor according to claim 1, wherein, the device for controlling the flow of the material comprises a device that drives the material to flow.

4. The chemical reactor according to claim 3, wherein, the device that drives the material to flow comprises a device for adjusting the elevation difference of the tank between the both ends of the tank.

5. The chemical reactor according to claim 3 or 4, wherein, the tank (2) is in straight shape, the device for driving the material to flow comprises a plurality of scrapers (8) and a drive unit (9), the scrapers (8) are fixed to the drive unit (9) at an interval, and at least a part of the drive unit (9) is located in the tank (2); the scrapers (8) are in a shape matching the cross section of the tank.

6. The chemical reactor according to claim 3 or 4, wherein, the tank (2) is in straight shape, the device for driving the material to flow comprises a single-screw driving mechanism or multi-screw driving mechanism, the single-screw driving mechanism or multi-screw driving mechanism is located in the tank (2); preferably, one or more first protuberances (20) is or are provided on the surface of the screw blades (15) of the single-screw driving mechanism or multi-screw driving mechanism; the minimum radial distance from the first protuberances (20) to the screw shaft (16) is 1/5-4/5 of the radial distance from the outer edge of screw blade (15) to the screw shaft (16), and the length of the first protuberances (20) along the screw shaft (16) is 1/5-4/5 of the screw pitch.

7. The chemical reactor according to claim 1, wherein, the device for altering the flow state of the material comprises second protuberances (14) arranged in the tank (2).

8. The chemical reactor according to claim 1 or 3, further comprising a heat exchanger and a temperature measuring and controlling device.

9. The chemical reactor according to claim 8, wherein, the heat exchanger comprises a heat exchanger for material and/or a heat exchanger for microwave irradiating cavity; the heat exchanger for material comprises a sandwich layer (22) arranged outside of the tank (2), through which a heat transfer medium can be run; the heat exchanger for microwave irradiating cavity (3) comprises a gas exchanger provided on the microwave irradiating cavity (3) and/or a heat exchanger provided in the microwave irradiating cavity; the gas exchanger is a gas exhaust device (6) and/or a gas intake device (11);
the temperature measuring and controlling device comprises a controller, a material temperature measuring device and/or a microwave irradiating cavity temperature measuring device;
the controller receives the signal of material temperature measured by the material temperature measuring device, and controls the flow rate of the heat transfer medium in the sandwich layer (22) according to the temperature of the heat transfer medium and the measured material temperature; and/or receives the signal of temperature in the microwave irradiating cavity (3) measured by the microwave irradiating cavity temperature measuring device, and controls the gas flow rate in the gas exchanger according to the measured microwave irradiating cavity temperature and/or control the flow rate of the heat transfer medium in the heat exchanger according to the temperature of the heat transfer medium in the heat exchanger and the measured microwave irradiating cavity temperature.

10. The chemical reactor according to claim 9, wherein, the sandwich layer (22) shares at least a surface with the tank (2), and has a plurality of third protuberances (23) arranged on at least one of the shared surfaces.

11. The chemical reactor according to claim 1 or 3, wherein, the microwave irradiating cavity (3) and the tank are in the plural, respectively; and the tanks (2) are provided in series or in parallel in the microwave irradiating cavities (3).

12. The use of the chemical reactor according to any of claims 1-11 in chemical reactions.

## Patentansprüche

1. Chemischer Reaktor für chemische Reaktionen verschiedener flüssiger Materialien, umfassend eine Mikrowellenstrahlungsvorrichtung und eine chemische Reaktionsvorrichtung, wobei die Mikrowellenstrahlungsvorrichtung einen Mikrowellenerzeuger und eine Mikrowellenstrahlungskavität (3) umfasst; wobei die chemische Reaktionsvorrichtung einen Tank (2) und eine Einrichtung zur Steuerung der Materialströmung umfasst, wobei der Tank (2) ein chemischer Reaktionskanal ist, dessen oberer Teil offen ist, und wobei zumindest ein Teil des Tanks (2) in der Mikrowellenstrahlungskavität (3) angeordnet ist,
**dadurch gekennzeichnet,**
**dass** die Einrichtung zur Steuerung der Materialströmung eine Einrichtung zur Veränderung des Strömungszustands des Materials von einem laminaren Zustand zu einem turbulenten Zustand oder zur Verstärkung des turbulenten Zustandes umfasst und ein in dem Tank angeordnetes Feststoffbett oder eine Vielzahl von längs des Tanks angeordneten Feststoffbetten umfasst, so dass das Material im Betrieb durch das Feststoffbett oder die Feststoffbetten fließen kann;
wobei die Feststoffteilchen feste Katalysatorpartikel sind.

2. Chemischer Reaktor nach Anspruch 1, wobei der Tank (2) eine gerade Form, eine Spiralform oder eine Schlangenform aufweist.

3. Chemischer Reaktor nach Anspruch 1, wobei die Einrichtung zur Steuerung der Materialströmung eine Einrichtung aufweist, die das Material zum Strömen antreibt.

4. Chemischer Reaktor nach Anspruch 3, wobei die Einrichtung, die das Material zum Strömen antreibt, eine Einrichtung zur Anpassung des Höhenunterschieds des Tanks zwischen den beiden Enden des Tanks umfasst.

5. Chemischer Reaktor nach Anspruch 3 oder 4, wobei der Tank (2) eine gerade Form aufweist, die Einrichtung, die das Material zum Strömen antreibt, eine Vielzahl von Schiebern (8) und eine Antriebseinheit (9) umfasst, die Schieber (8) in einem Intervall an der Antriebseinheit (9) befestigt sind und zumindest ein Teil der Antriebseinheit (9) in dem Tank (2) angeordnet ist; wobei die Schieber (8) eine dem Querschnitt des Tanks entsprechende Form aufweisen.

6. Chemischer Reaktor nach Anspruch 3 oder 4, wobei der Tank (2) eine gerade Form aufweist, die Einrichtung, die das Material zum Strömen antreibt, einen Einschnecken-Antriebsmechanismus oder einen Mehrschnecken-Antriebsmechanismus aufweist und der Einschnecken-Antriebsmechanismus oder MehrschneckenAntriebsmechanismus in dem Tank (2) angeordnet ist; wobei vorzugsweise ein oder mehrere erste Vorsprünge (20) auf der Oberfläche der Schneckenblätter (15) des Einschnecken-Antriebsmechanismus oder Mehrschnecken-Antriebsmechanismus vorgesehen ist/sind; wobei der minimale radiale Abstand zwischen den ersten Vorsprüngen (20) und der Schneckenwelle (16) 1/5-4/5 des radialen Abstands zwischen der Außenkante des Schneckenblatts (15) und der Schneckenwelle (16) beträgt und die Länge der ersten Vorsprünge (20) entlang der Schneckenwelle (16) 1/5-4/5 der Schneckensteigung beträgt.

7. Chemischer Reaktor nach Anspruch 1, wobei die Einrichtung zur Veränderung des Strömungszustandes des Materials zweite Vorsprünge (14) umfasst, die in dem Tank (2) angeordnet sind.

8. Chemischer Reaktor nach Anspruch 1 oder 3, weiterhin umfassend einen Wärmetauscher und eine Temperaturmess- und Steuereinrichtung.

9. Chemischer Reaktor nach Anspruch 8, wobei der Wärmetauscher einen Wärmetauscher für das Material und/oder einer Wärmetauscher für die Mikrowellenstrahlungskavität umfasst; wobei der Wärmetauscher für das Material eine außerhalb des Tanks (2) angeordnete Sandwich-Schicht (22) umfasst, die von einem Wärmeträgermittel durchflossen werden kann; wobei der Wärmetauscher für die Mikrowellenstrahlungskavität (3) einen an der Mikrowellenstrahlungskavität (3) vorgesehenen Gastauscher und/oder einen in der Mikrowellenstrahlungskavität vorgesehenen Wärmetauscher umfasst; wobei der Gastauscher eine Gasauslassvorrichtung (6) und/oder eine Gaseinlassvornchtung (11) ist;
wobei die Temperaturmess- und Steuereinrichtung eine Steuerung, eine Materialtemperatur-Messeinrichtung und/oder eine Mikrowellenstrahlungskavitätstemperatur-Messeinrichtung umfasst;
wobei die Steuerung das Signal der von der Materialtemperatur-Messeinrichtung gemessenen Temperatur empfängt und den Durchsatz des Wärmeträgermediums in der Sandwich-Schicht (22) gemäß der Temperatur des Wärmeträgermediums und der gemessenen Materialtemperatur steuert; und/oder das Signal der von der Mikrowellenstrahlungskavitätstemperatur-Messeinrichtung gemessenen Temperatur in der Mikrowellenstrahlungskavität (3) empfängt und den Gasdurchsatz in dem Gastauscher gemäß der gemessenen Temperatur der Mikrowellenstrahlungskavität steuert und/oder den Durchsatz des Wärmeträgermediums in dem Wärmetauscher gemäß der Temperatur des Wärmeträgermediums in dem Wärmetauscher und der gemessenen Temperatur der Mikrowellenstrahlungskavität steuert.

10. Chemischer Reaktor nach Anspruch 9, wobei die Sandwich-Schicht (22) mindestens eine gemeinsame Oberfläche mit dem Tank (2) und eine Vielzahl von dritten Vorsprüngen (23) aufweist, die auf mindestens einer der gemeinsamen Oberflächen angeordnet sind.

11. Chemischer Reaktor nach Anspruch 1 oder 3, wobei die Mikrowellenstrahlungskavität (3) und der Tank jeweils mehrfach vorhanden sind; und die Tanks (2) in Reihe oder parallel in den Mikrowellenstrahlungskavitäten (3) vorgesehen sind.

12. Verwendung des chemischen Reaktors nach einem der Ansprüche 1 bis 11 bei chemischen Reaktionen.

## Revendications

1. Réacteur chimique pour des réactions chimiques de diverses matières liquides, comprenant un appareil irradiant des micro-ondes et un appareil de réaction chimique, l'appareil irradiant des micro-ondes comprenant un générateur de micro-ondes et une cavité irradiant des micro-ondes (3) ; l'appareil de réaction chimique comprenant un réservoir (2) et un dispositif permettant de réguler l'écoulement de la matière, le réservoir (2) étant un conduit de réaction chimique dont la partie supérieure est ouverte, et au moins une partie du réservoir (2) étant située dans la cavité irradiant des micro-ondes,
**caractérisé en ce que**
le dispositif permettant de réguler l'écoulement de la matière comprend un dispositif permettant de modifier l'état d'écoulement de la matière à partir d'un état laminaire à un état turbulent ou d'intensifier l'état turbulent et comprend un lit de particules solides disposé dans le réservoir ou une pluralité de lits de particules solides disposés le long de la longueur du réservoir de sorte que pendant l'utilisation la matière peut s'écouler à travers le lit ou les lits de particules solides ;
dans lequel les particules solides sont des particules solides de catalyseur.

2. Réacteur chimique selon la revendication 1, dans lequel le réservoir (2) a une forme droite, une forme spiralée ou une forme serpentine.

3. Réacteur chimique selon la revendication 1, dans lequel le dispositif permettant de réguler l'écoulement de la matière comprend un dispositif qui entraîne la matière à s'écouler.

4. Réacteur chimique selon la revendication 3, dans lequel le dispositif qui entraîne la matière à s'écouler comprend un dispositif permettant d'ajuster la différence de niveau du réservoir entre les deux extrémités du réservoir.

5. Réacteur chimique selon la revendication 3 ou 4, dans lequel le réservoir (2) a une forme droite, le dispositif permettant d'entraîner la matière à s'écouler comprend une pluralité de racleurs (8) et une unité d'entraînement (9), les racleurs (8) sont fixés à l'unité d'entraînement (9) à une intervalle et au moins une partie de l'unité d'entraînement (9) est située dans le réservoir (2) ; les racleurs (8) ayant une forme qui correspond à la section transversale du réservoir.

6. Réacteur chimique selon la revendication 3 ou 4, dans lequel le réservoir (2) a une forme droite, le dispositif permettant d'entraîner la matière à s'écouler comprend un mécanisme entraînant à une seule hélice ou un mécanisme entraînant à plusieurs hélices, le mécanisme entraînant à une seule hélice ou le mécanisme entraînant à plusieurs hélices étant situé dans le réservoir (2) ; de préférence, une ou plusieurs premières protubérances (20) est ou sont prévue(s) sur la surface des lames de hélice (15) du mécanisme entraînant à une seule hélice ou du mécanisme entraînant à plusieurs hélices ; la distance radiale minimale entre les premières protubérances (20) et l'arbre de hélice (16) est 1/5 à 4/5 de la distance radiale entre le bord extérieur de la lame de hélice (15) et l'arbre de hélice (16), et la longueur des premières protubérances (20) le long de l'arbre de hélice (16) est 1/5 à 4/5 du pas de hélice.

7. Réacteur chimique selon la revendication 1, dans lequel le dispositif permettant de modifier l'état d'écoulement de la matière comprend des deuxièmes protubérances (14) disposées dans le réservoir (2).

8. Réacteur chimique selon la revendication 1 ou 3, comprenant en outre un échangeur de chaleur et un dispositif de mesure et régulation de température.

9. Réacteur chimique selon la revendication 8, dans lequel l'échangeur de chaleur comprend un échangeur de chaleur pour la matière et/ou un échangeur de chaleur pour la cavité irradiant des micro-ondes ; l'échangeur de chaleur pour la matière comprend une couche en sandwich (22) disposée à l'extérieure du réservoir (2) dans laquelle un fluide caloporteur peut être fait couler ; l'échangeur de chaleur pour la cavité irradiant des micro-ondes (3) comprend un échangeur de gaz prévu sur la cavité irradiant des micro-ondes (3) et/ou un échangeur de chaleur prévu dans la cavité irradiant des micro-ondes ; l'échangeur de gaz est un dispositif d'échappement de gaz (6) et/ou un dispositif d'admission de gaz (11) ;
le dispositif de mesure et régulation de température comprend un régulateur, un dispositif de mesure de température de matière et/ou un dispositif de mesure de température de cavité irradiant des micro-ondes ;
le régulateur reçoit le signal de la température de la matière mesurée par le dispositif de mesure de température de matière et régule le débit d'écoulement du fluide caloporteur dans la couche en sandwich (22) selon la température du fluide caloporteur et la température mesurée de la matière ; et/ou il reçoit le signal de la température dans la cavité irradiant des micro-ondes (3) mesurée par le dispositif de mesure de température de cavité irradiant des micro-ondes et régule le débit d'écoulement du gaz dans l'échangeur de gaz selon la température mesurée de la cavité irradiant des micro-ondes et/ou il régule le débit d'écoulement du fluide caloporteur dans l'échangeur de chaleur selon la température du fluide caloporteur dans l'échangeur de chaleur et la température mesurée de la cavité irradiant des micro-ondes.

10. Réacteur chimique selon la revendication 9, dans lequel la couche en sandwich (22) partage au moins une surface avec le réservoir (2) et a une pluralité de troisièmes protubérances (23) disposées sur au moins une des surfaces partagées.

11. Réacteur chimique selon la revendication 1 ou 3, dans lequel la cavité irradiant des micro-ondes (3) et le réservoir sont représentés respectivement plusieurs fois ; et les réservoirs (2) sont prévus en série ou parallèlement dans les cavités irradiant des micro-ondes (3).

12. Utilisation du réacteur chimique selon l'une quelconque des revendications 1 à 11 dans des réactions chimiques.
